# EUROPÄISCHE PATENTSCHRIFT

(11) **EP 1 961 706 B1**
(45) Veröffentlichungstag und Bekanntmachung des Hinweises auf die Patenterteilung: **08.12.2010**
(21) Anmeldenummer: 06812908.9
(22) Anmeldetag: 08.09.2006
(51) Int. Cl.: C02F 1/461

(54) **VORRICHTUNG ZUR ELEKTROCHEMISCHEN VERARBEITUNG VON WASSER**
ELECTROCHEMICAL WATER TREATMENT DEVICE
DISPOSITIF DE TRAITEMENT ELECTROCHIMIQUE DE L'EAU

(30) Priorität: 21.10.2005 RU 2005132501
(43) Veröffentlichungstag der Anmeldung: 27.08.2008
(73) Patentinhaber: Vinogradov, Vladimir Vikentievich, St. Petersburg 196607 (RU); Vinogradova, Svetlana Yurievna, St. Petersburg 196607 (RU)
(72) Erfinder: Vinogradov, Vladimir Vikentievich, St. Petersburg 196607 (RU); Vinogradova, Svetlana Yurievna, St. Petersburg 196607 (RU)
(74) Vertreter: Jeck, Anton
(86) Internationale Anmeldenummer: PCT/RU2006/000478
(87) Internationale Veröffentlichungsnummer: WO 2007/046730

(56) Entgegenhaltungen:
- RU-C1- 2 132 821
- RU-C1- 2 145 940
- RU-U1- 44 979

## Beschreibung

Die Erfindung betrifft eine Einrichtung zur elektrochemischen Behandlung von Wasser oder Wasserlösungen mit einer Außenelektrode in Form eines Hohlzylinders und einer in diese Außenelektrode koaxial eingebaute Innenelektrode. Dabei ist zwischen der Außenelektrode und der Innenelektrode ein halbdurchlässiges Diaphragma angeordnet, das den Elektrodenraum in eine innere und eine äußere Elektrodenkammer abteilt, wobei im oberen Teil der Seitenwand der Außenelektrode eine Öffnung ausgebildet ist, die die äußere Elektrodenkammer mit einem Austrittskanal zur Ableitung von Flüssigkeit verbindet und wobei im oberen Teil der Innenelektrode mindestens eine Öffnung vorgesehen ist, die die innere Elektrodenkammer mit einem Flüssigkeitsabführungskanal verbindet. Die Einrichtung kann zur Reinigung und Entkeimung von Wasser, zur kathodischen Wasserenthärtung sowie zur Erzeugung von Wasch- und Desinfektionslösungen eingesetzt werden.

Es sind verschiedene Arten von Einrichtungen zur elektrochemischen Wasserbehandlung bekannt. Sie enthalten eine äußere Zylinderelektrode, in der eine innere Elektrode angeordnet ist. Zwischen den Elektroden ist ein halbdurchlässiges Diaphragma angeordnet. Das Diaphragma teilt den Elektrodenraum in die innere und die äußere Elektrodenkammer ein. [Japanische Anmeldung Nr. 1-104387, Kl. C 02F 1/46, 1989, Patent der RF Nr. 2078737, Kl. C02F1/46, 1997].

Das Erreichen des erforderlichen technischen Ergebnisses wird durch die begrenzten Funktionalitäten der Einrichtungen verhindert, die es nicht ermöglichen, die Lösungen mit einem vorgegebenen Redoxpotential innerhalb eines breiten Bereiches und mit verschiedenen pH-Werten zu bekommen.

Es ist eine Einrichtung zur elektrochemischen Behandlung von Wasser und Wasserlösungen bekannt, welche eine Außenelektrode enthält. Die Außenelektrode ist als ein Hohlzylinder ausgeführt. Innerhalb des Hohlzylinders ist die zylinderförmige Innenelektrode koaxial angeordnet Zwischen den Elektroden ist ein halbdurchlässiges Diaphragma koaxial eingebaut. Es teilt den Elektrodenraum in die innere und die äußere Elektrodenkammer ein. Dabei ist die innere Efektrodenkammer direkt mit dem Kanal zur Flüssigkeitszuführung verbunden ist. (Patent der RF Nr. 2145940, Kl. C02F1/461, 2000).

Der dem Anmeldungsgegenstand in der Gesamtheit der wesentlichen Merkmale am nächsten kommende Stand der Technik (Prototyp) ist eine Einrichtung zur elektrochemischen Wasserbehandlung bzw. zur Behandlung von Wasserlösungen. Diese enthält eine äußere Rohrelektrode. Innerhalb der äußeren Rohrelektrode ist die innere Elektrode angeordnet. Zwischen den Elektroden ist ein halbdurchlässiges Diaphragma angeordnet. Das Diaphragma teilt den Elektrodenraum in die innere und die äußere Elektrodenkammer ein. Die äußere Elektrodenkammer ist über die Öffnungen in der Seitenfläche der äußeren Zylinderelektrode mit den Ein- und Ausgangskanälen verbunden. In der Innenelektrode ist mindestens eine Öffnung ausgeführt. Diese Öffnung verbindet die Innenkammer mit einem Kanal zur Flüssigkeitszuführung [Patent der RF Nr. 2132821 6 C02F1/46, 1999].

Das Erreichen des erforderlichen technischen Ergebnisses wird durch die begrenzten Funktionalitäten der Einrichtungen verhindert, die es nicht ermöglichen, die Lösungen mit einem vorgegebenen Redoxpotential innerhalb von einem breiten Bereich zu bekommen. Die weiteren Mängel sind geringe Durchsatzleistung, komplizierte Montage und Instandsetzung.

Es ist Aufgabe der Erfindung eine Einrichtung der eingangs erwähnten Art zu schaffen, die eine hohe Durchsatzleistung garantiert.

Diese Aufgabe wird nach der Erfindung dadurch gelöst, dass die innere Elektrodenkammer direkt mit einem Flüssigkeitszuführkanal verbunden ist und dass die Innenelektrode im unteren Teil als Vollwand ausgebildet ist.

Das bei der Realisierung der angemeldeten Erfindung erreichte technische Ergebnis lässt sich im Folgendem ausdrücken: Erhöhung der Durchsatzleistung, Erweiterung des Bereich von erreichbaren pH-Werten sowie den Werten der Reduktions-Oxidations-Potentiale des behandelten Wassers, Erhöhung der Betriebssicherheit der Einrichtung, Verlängerung der Lebensdauer, Senkung von Arbeitsaufwand während der Montage und Instandsetzung der Einrichtung, Senkung von Energieverbrauch beim Betrieb der Einrichtung, Besserung der Kompaktheit der Einrichtung.

Die innere Elektrodenkammer wird so ausgeführt, dass sie mit dem Kanal zur Flüssigkeitszufuhr direkt verbunden ist. Und die innere Elektrode wird mit einer Vollwand in ihrem unteren Teil versehen.

Gemäß einem Einzelfall der Ausführung der Erfindung sind in der Einrichtung zur elektrochemischen Behandlung von Wasser bzw. Wasserlösungen die Außenelektrode, die Innenelektrode und das Diaphragma an einem unteren Flansch befestigt. Dieser Flansch ist mit einem Flüssigkeitszufuhrkanal versehen. Der Flüssigkeitszufuhrkanal steht in Verbindung mit der inneren Elektrodenkammer.

Gemäß einem Einzelfall der Ausführung der Erfindung sind in der Einrichtung zur elektrochemischen Behandlung von Wasser bzw. Wasserlösungen die Außenelektrode, die Innenelektrode und das Diaphragma oben mit einem Deckel befestigt. Dabei ist das Diaphragma mittels Nutverbindungen mit Gummidichtungen versehen, um die Dichtheit zu verbessern.

Gemäß einem Einzelfall der Ausführung der Erfindung ist die Innenelektrode in der Einrichtung zur elektrochemischen Behandlung von Wasser bzw. Wasserlösungen als eine Stange ausgebildet.

Gemäß einem Einzelfall der Ausführung der Erfindung ist die Innenelektrode in der Einrichtung zur elektrochemischen Behandlung von Wasser bzw. Wasserlösungen in Form von einem Hohlzylinders ausgeführt. In diesem Hohlzylinder ist mindestens ein Verschluss-Stück angeordnet. Das Verschluss-Stück dichtet einen Innenraum ab, welcher unter der Öffnung liegt. Die Öffnung verbindet die innere Elektrodenkammer mit dem Flüssigkeitsableitungskanal.

Gemäß einem Einzelfall der Ausführung der Erfindung ist die Innenelektrode in der Einrichtung zur elektrochemischen Behandlung von Wasser bzw. Wasserlösungen als eine zusammengestellte Elektrode ausgebildet. Diese Innenelektrode besteht mindestens aus zwei Teilen. Dabei ist der obere Teil mindestens mit einer Öffnung versehen. Diese Öffnung verbindet die innere Elektrodenkammer mit dem Flüssigkeitsableitungskanal.

Gemäß einem Einzelfall der Ausführung der Erfindung sind die Teile der Innenelektrode in der Einrichtung zur elektrochemischen Behandlung von Wasser bzw. Wasserlösungen mittels einer mechanischen Verbindung (zum Beispiel, Verschraubung) miteinander verbunden.

Gemäß einem Einzelfall der Ausführung der Erfindung ist im unteren Teil der Seitenwand der Außenelektrode in der Einrichtung zur elektrochemischen Behandlung von Wasser bzw. Wasserlösungen mindestens eine zusätzliche Öffnung ausgeführt. Die Öffnung verbindet die äußere Elektrodenkammer mit dem Flüssigkeitszufuhrkanal.

Gemäß einem Einzelfall der Ausführung der Erfindung wirkt die Innenelektrode in der Einrichtung zur elektrochemischen Behandlung von Wasser bzw. Wasserlösungen als Anode, die Außenelektrode dient als Kathode.

Gemäß einem Einzelfall der Ausführung der Erfindung ist die Innenelektrode in der Einrichtung zur elektrochemischen Behandlung von Wasser bzw. Wasserlösungen mittels eines Stifts oder einer Schraube am unteren und / oder oberen Flansch befestigt.

Gemäß einem Einzelfall der Ausführung der Erfindung ist im unteren Flansch in der Einrichtung zur elektrochemischen Behandlung von Wasser bzw. Wasserlösungen ein ringförmiges Loch ausgebildet. Dieses Loch bildet einen Kanal für die Zuführung von Flüssigkeit in die innere Elektrodenkammer.

Gemäß einem Einzelfall der Ausführung der Erfindung ist im unteren Flansch in der Einrichtung zur elektrochemischen Behandlung von Wasser bzw. Wasserlösungen mindestens ein waagerechter Flüssigkeitszufuhrkanal ausgebildet. Dieser Kanal ist mit dem Kanal für die Flüssigkeitszufuhr in die innere Elektrodenkammer verbunden.

Gemäß einem Einzelfall der Ausführung der Erfindung besteht das halbdurchlässige Diaphragma in der Einrichtung zur elektrochemischen Behandlung von Wasser bzw. Wasserlösungen aus Zirkoniumoxidkeramik bzw. aus Textil.

Gemäß einem Einzelfall der Ausführung der Erfindung ist das halbdurchlässiges Diaphragma in der Einrichtung zur elektrochemischen Behandlung von Wasser bzw. Wasserlösungen als ein Ultrafiltrations-, oder Mikrofiltrations- oder ein Nanofiltrationsdiaphragma ausgebildet.

Die Erfindung wird anhand der Zeichnungen näher erläutert. Es zeigen:
- Fig.: 1 schematisch eine Einrichtung zur elektrochemischen Behandlung von Wasser bzw. Wasserlösungen;
- Fig. 2: eine enthält schematische Darstellung der Einrichtung zur elektroche- mischen Behandlung von Wasser bzw. Wasserlösungen mit einem zu- sätzlichen Einlaufkanal- und

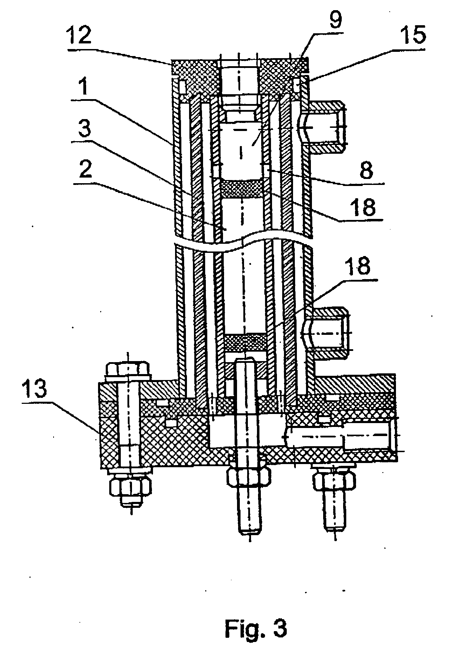

- Fig. 3: eine Ausführung der Innenelektrode in Form eines Hohlzylinders.

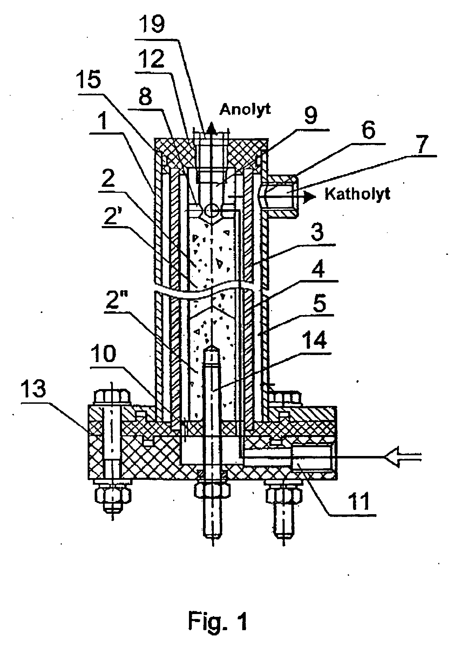

Die Einrichtung zur elektrochemischen Behandlung von Wasser bzw. Wasserlösungen enthält eine Außenelektrode 1 in Form von einem Hohlzylinder. Innerhalb dieses Hohlzylinders ist eine Innenelektrode 2 eingebaut. Zwischen den Elektroden ist ein halbdurchlässiges Diaphragma 3 angeordnet. Das Diaphragma 3 teilt den Elektrodenraum in die innere Elektrodenkammer 4 und die äußere Elektrodenkammer 5 (Fig. 1). Im oberen Teil der Seitenfläche der Außenelektrode 1 ist eine Öffnung 6 ausgeführt. Mittels dieser Öffnung ist die äußere Elektrodenkammer 5 mit dem Austrittskanal 7 verbunden. Die Innenelektrode 2 ist mit mindestens einer Öffnung 8 versehen, welche die innere Elektrodenkammer 4 mit einem Kanal 9 zur Ableitung der Flüssigkeit verbindet. Die innere Elektrodenkammer 4 ist mittels eines ringförmigen Kanals 10 mit einem waagerechten Kanal 11 verbunden, um die Zuführung von der zu behandelten Flüssigkeit sicherzustellen.

Die Außenelektrode 1, die Innenelektrode 2 als Stabelektrode und das Diaphragma 3 sind gegenseitig unbeweglich und koaxial mittels des Deckels 12 und des unteren Flansches 13 befestigt. Der untere Flansch 13 kann mehrteilig ausgeführt sein.

Das Diaphragma 3 ist mittels Nutverbindungen am unteren Flansch 13 und Deckel 12 befestigt, und an seinen Stirnflächen ist es mit Gummiringen abgedichtet. Die Außenelektrode 1 ist am unteren Flansch 13 montiert. Ihre Befestigung wird mittels Anpressung mit dem Deckel 12 sichergestellt. Die Außenelektrode 1 kann am unteren Flansch 13 befestigt werden, indem sie an einen Bauteil in Form von einem Flachring angeschweißt wird. Anschließend wird sie mit dem Flansch 13 mittels einer Schraube verschraubt.

Die Innenelektrode 2 ist am unteren Flansch 13 anhand eines Stifts 14 positioniert. Im Deckel 12 ist die Innenelektrode 2 mittels Nutverbindungen und einer Spann-Hohlschraube 19 arretiert.

Das Diaphragma 3 kann aus Zirkoniumoxidkeramik bzw. aus Textil bestehen. Es kann ein Ultrafiltrations-, oder Mikrofiltrations-, oder Nanofiltrationsdiaphragma sein.

Die Abdichtung der äußeren Elektrodenkammer 5 (der Kammem) erfolgt durch die im Deckel 12 und am Flansch 13 eingesetzten Dichtelemente 15.

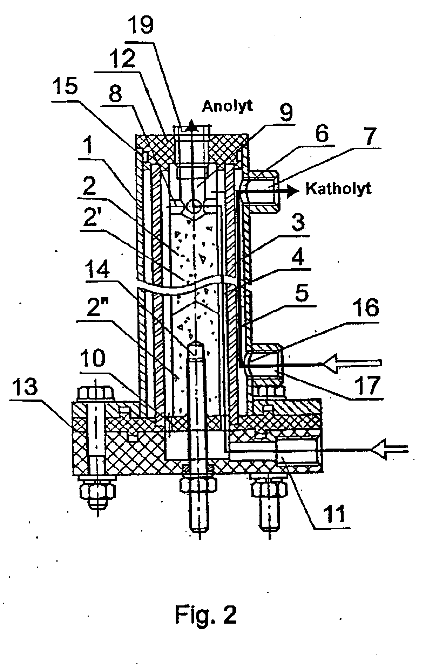

In der Seitenfläche der Außenelektrode 1 kann eine zusätzliche Bohrung 16 ausgeführt sein, um die äußere Elektrodenkammer 5 mit dem Einlaufkanal 17 (Fig. 2) zu verbinden.

Je nach der Funktion und dem Bestimmungszweck kann die Innenelektrode 2 als Kathode und die Außenelektrode als Anode dienen. Die innere Elektrodenkammer 4 kann als Arbeitskammer und die äußere Elektrodenkammer 5 als Hilfskammer eingesetzt werden.

Die Innenelektrode 2 kann als Stabelektrode ausgeführt sein und aus zwei Teilen einem oberen Teil 2' und einem unteren Teil 2" (Fig. 1) bestehen. Öffnungen 8 sind im oberen Teil der Stabelektrode 2" ausgeführt. Der obere Teil 2' und der untere Teil 2" der Innenelektrode 2 können miteinander in verschiedener Weise verbunden werden. Sie können zum Beispiel verschraubt werden. Es ist ein anderer Einzelfall der Ausführung der Innenelektrode möglich, z.B. in Form von einem Hohlzylinder. In diesem Hohlzylinder wird mindestens ein Verschluss-Stück 18 angeordnet. Das Verschluss-Stück 18 dichtet einen Innenraum ab, welcher unter der Öffnung 8 liegt. Die Innenelektrode kann auch als eine unteilbare Stabelektrode ausgeführt werden. Diese Innenelektrode wird an ihren Enden mit einem Außengewinde versehen, um den Deckel 12 und den Flansch 13 festzuziehen.

Die Funktionsweise der Einrichtung ist wie folgt.

Je nach dem welche Lösung hergestellt werden muss, wird in die Einrichtung Wasser und /oder verschiedene Salzlösungen gefördert.

Der Kanal 11 dient zur Zuleitung von dem zu behandelten Wasser bzw. der Salzlösung. Der Kanal 17 ist für die Zuführung der Salzlösung vorgesehen. Der Kanal 9 ist für die Ableitung der behandelten Flüssigkeit (Anodenlösung) vorgesehen. Der Kanal 7 ist für die Ableitung von Kathodenlösung oder Salzlösung vorgesehen.

Um die Anodenlösung und die Kathodenlösung zu bekommen, wird in den Kanal 11 die Natriumchloridlösung gefördert. Über den ringförmigen Kanal 10 läuft die Lösung in die innere Elektrodenkammer 4. Die Elektroden werden so unter Spannung gesetzt, dass Innenelektrode 2 als Anode und die Außenelektrode 1 als Kathode dient. Unter Druck wird die Lösung über das halbdurchlässige Diaphragma 3 in die äußere Elektrodenkammer 5 gefördert. Während des Betriebs der Einrichtung werden zwei entgegengesetzt geladene Ionenflüsse an der Außen- und Innenoberfläche des Diaphragmas 3 gebildet. Zwischen den Ionenflüssen entsteht eine Potentialdifferenz. Die geladenen Ionenflüsse erhöhen die elektrische Feldstärke im Diaphragma 3 um 35 bis 50 V/cm². Dadurch nimmt die Ionenbeweglichkeit in den Poren des Diaphragmas zu, und der elektrische Widerstand der Einrichtung nimmt ab. Infolge dessen wird eine elektrisch aktivierte Anodenlösung gebildet. Diese Anodenlösung wird über den Kanal 9 abgeleitet. Es wird auch eine Kathodenlösung gebildet, welche über den Kanal 7 abgeleitet wird. Wenn die Einrichtung mit einer zusätzlichen Öffnung 16 und einen Kanal 17 ausgeführt ist, so kann über den Kanal 17 ebenfalls die Natriumchloridlösung zugeführt werden.

Um Desinfektionslösungen zu bekommen, wird über den Kanal 11 Wasser zugeführt. Das Wasser läuft in die innere Elektrodenkammer 4 ein. Über den Kanal 17 wird 30 %-ge Natriumchloridlösung gefördert. Natriumchloridlösung läuft im Raum der äußeren Elektrodenkammer 5 um. Dabei wird der Kanal 7 zum Ablass dieser Lösung in einen Behälter mit Salzlösung benutzt. Danach wird dieser Behälter als eine Versorgungsquelle für die Zuführung der Lösung zurück in die Einrichtung über den Kanal 17 benutzt. Das Wasser läuft über die innere Elektrodenkammer 4 und wird über den Kanal 9 als Anodenlösung abgeleitet.

Die Polaritätsanordnung der Elektroden kann unterschiedlich sein: Außenelektrode - Kathode, Innenelektrode - Anode und umgekehrt, Außenelektrode - Anode, Innenelektrode - Kathode. Dank der Möglichkeit der Umkehrpolung der Elektroden kann des Problem der Kathodenablagerungen sowie und der Ablagerungen von Salzen auf dem Diaphragma vermieden werden. Dieser Umstand stellt einen wesentlichen Vorteil dar, weil dadurch die Zuverlässigkeit erhöht und die Lebensdauer der Einrichtung verlängert wird. Kathodenablagerungen entstehen während des Betriebs der Einrichtungen und können mittels Umkehrpolung der Elektroden entfernt werden. Dies stellt die Bedienungsfreundlichkeit der Einrichtung im Laufe des Betriebs sicher.

Die Ausführung der Innenelektrode 2 mit einer Vollwand im ihrem unteren Teil und die direkte Verbindung der inneren Elektirodenkammer 4 mit dem Flüssigkeitszufuhrkanal 10 ermöglicht es, die Einrichtung noch kompakter zu machen. Dabei ist der Unterschied zwischen den Höhen der Außen-, der Innenelektrode und des Diaphragmas ziemlich gering, und zwar fällt er mit der Größe der Nuten zusammen, die für die Befestigung vorgesehen sind. Dementsprechend ist die gesamte Oberfläche der Elektroden und des Diaphragmas in diesem elektrochemischen Ablauf völlig einbezogen. Dies erhöht die Durchsatzleistung der Einrichtung. Gleichzeitig wird die Einsparung an Elektrodenmaterial sichergestellt. Dies ermöglicht es, den Bereich der Kennwerte des behandelten Wassers zu erweitern.

Die direkte Verbindung der inneren Elektrodenkammer mit dem Flüssigkeitszufuhrkanal stellt den gleichmäßigen Durchlauf der Flüssigkeit durch die Elektrodenkammern sicher. Der hohe Vermischungsgrad von Wasser in den Kammern sowie die Gleichmäßigkeit der elektrochemischen Durcharbeitung des gesamten Volumens der durchfließenden Flüssigkeit ermöglichen es, die Behandlung von allen Mikrovolumen von Wasser im diffusen Teil der elektrischen Doppelschicht an der Phasengrenze " Elektrode - Elektrolyt.

Das Diaphragma ist zwischen der Anode und der Kathode angeordnet und trägt grundsätzlich zu dem elektrischen Widerstand der Einrichtung bei. Die effektvolle Nutzung der Oberfläche des Diaphragmas ermöglicht es, den elektrischen Widerstand abzubauen und folglich die Einrichtung weniger stromintensiv zu machen. Dank der Möglichkeit, Diaphragmas mit unterschiedlicher Durchlässigkeit zu wechseln, können Lösungen mit verschiedenen pH-Werten und Werten von Redoxpotential hergestellt werden.

Die Ausführung der Öffnung im oberen Teil der Innenelektrode stellt die Verbindung mit dem Kanal zur Ableitung der behandelten Flüssigkeit her

Die Ausführung der Innenelektrode 2 mit einer Vollwand in ihrem unteren Teil und die direkte Verbindung der inneren Elektrodenkammer 4 mit dem Flüssigkeitszufuhrkanal 10 führt dazu, dass die innere Elektrodenkammer 4 an der elektrochemischen Behandlung teilnimmt. Im Vergleich zum Prototyp, wo das zu behandelnde Wasser zusätzlich in die innere Hohlelektrode hineingefördert wird.

Das Wasser läuft hoch und gerät nach der Behandlung in die Öffnungen 8, wo es verlangsamt und vermischt wird. Danach läuft das Wasser in den Kanal 9 aus, wobei Wirbelungen zur turbulenten Durchmischung innerhalb des Umfangs gebildet werden. Dies mindert die Möglichkeit, dass am Auslauf der inneren Elektrodenkammer Totgebiete gebildet werden. Es werden auch weniger Totgebiete am Ein- und Auslauf der Anodenkammer gebildet. Die Diaphragma-Oberfläche wird viel effektvoller benutzt.

Die Konstruktion der Einrichtung ermöglicht es, die Anzahl von Gegenstücken und verdichtbaren Bauteilen zu reduzieren und folglich die Zuverlässigkeit der Einrichtung zu erhöhen.

Die Montage und die Instandsetzung der Einrichtung wird sehr einfach durchgeführt. Das Diaphragma 3 wird mittels der Nuten senkrecht im Deckel 12 angeordnet. Der Stift 14 wird in die Innenelektrode 2 eingeschraubt. Danach erfolgt die Befestigung der Bauteile mittels Einschraubung der Schraube im unteren Teil des Stifts 14 und der Spannschraube 19.

Der Durchmesser der inneren Oberfläche der Außenelektrode beträgt 34 mm. Der Durchmesser des Arbeitsteils der Innenelektrode beträgt 16 mm. Der Abstand zwischen den Elektroden beträgt 9 mm. Diese Durchmesser stellen die optimalen Bedingungen für den Kontakt zwischen jedem Volumen der durchfließenden Lösung oder des Wassers mit der Oberfläche des Diaphragmas dar. Das Diaphragma ist aus Keramik ausgeführt. Das Diaphragma kann auch aus anderen Materialen ausgeführt werden, die gegen Einwirkungen von aggressiven Medien resistent sind. Das Diaphragma kann unterschiedliche Dicke und Durchlässigkeit aufweisen, je nach den Eigenschaften der Lösungen, die hergestellt werden müssen. Die Kathode der Einrichtung wird aus nichtrostendem Stahl, Titan, Glaskohle, der leitfähigen und säurefesten Materialien, Niobium hergestellt. Die Kathode wird mit Platin, Iridium, Ruthenoxiden, Kobalt und anderen Materialen bedeckt. Die Anode wird aus Titan, Niobium, Tantal, Graphit hergestellt und wird mit Platin, Iridium, Ruthenoxiden oder anderen Metallen bedeckt.

Dank der Benutzung der Einrichtung können Lösungen mit pH-Werten von 2 bis 12 und Redoxpotential-Werten von -950 mV bis zu +1200 mV hergestellt werden, In der Tabelle sind die Vergleichskennwerte der Einrichtung und von derzeit gefertigten Vergleichserzeugnisse angeführt.

Parameter und Kennwerte der Einrichtungen zur elektrochemischen Wasserbehandlung

| Parameter | Einrichtungen | |
|---|---|---|
| | Vergleichserzeugnis | Angemeldete Einrichtung |
| Durchsatzvolumen, cm³/s | 2,8-8,3 | 27-35 |
| Lineargeschwindigkeit, cm/s | 5,8-24 | 25-64 |
| Wasserbehandlungsdauer, s | 0,8-3 | 0,3-0,75 |
| Stromstärke, A | 3-8 | 1,5-30 |
| Spannung, V | 10-24 | 30-120 |
| Mineralisierung von Wasser, g/l | 0,5-5,0 | 0,1-5,0 |
| Spezifische Strommenge, Coulomb/l | 360-2880 | 40-470 |
| Menge der behandelten Flüssigkeit, I/Stunde | 60 | 120 |
| Dauerbetriebszeit, Stunden | 15000 | 40000 |

Aus den Tabellenangaben ist ersichtlich, dass die angemeldete Einrichtung im Vergleich zum Stand der Technik höhere Kennwerte aufweist.

## Patentansprüche

1. Einrichtung zur elektrochemischen Behandlung von Wasser oder Wasserlösungen mit einer Außenelektrode (1) in Form eines Hohlzylinders und einer in diese Außenelektrode (1) koaxial eingebaute Innenelektrode (2), wobei zwischen der Außenelektrode (1) und der Innenelektrode (2) ein halbdurchlässiges Diaphragma (3) angeordnet ist, das den Elektrodenraum in eine innere und eine äußere Elektrodenkammer (4 und 5) abteilt, wobei im oberen Teil der Seitenwand der Außenelektrode (1) eine Öffnung (6) ausgebildet ist, die die äußere Elektrodenkammer (5) mit einem Austrittskanal (7) zur Ableitung von Flüssigkeit verbindet und wobei im oberen Teil der Innenelektrode (2) mindestens eine Öffnung (8) vorgesehen ist, die die innere Elektrodenkammer (4) mit einem Flüssigkeitsabführungskanal verbindet, **dadurch gekennzeichnet,**
**dass** die innere Elektrodenkammer (4) direkt mit einem Flüssigkeitszuführkanal (10, 11) verbunden ist und
**dass** die Innenelektrode (2) im unteren Teil als Vollwand ausgebildet ist.

2. Einrichtung nach Anspruch 1,
**dadurch gekennzeichnet,**
**dass** die Außenelektrode (1), die Innenelektrode (2) und das Diaphragma (3) an einem unteren Flansch (13) befestigt sind, der mit dem Flüssigkeitszuführkanal (10, 11) versehen ist und
**dass** der Flüssigkeitszuführkanal (10, 11) mit der inneren Elektrodenkammer (4) in Verbindung steht.

3. Einrichtung nach Anspruch 1,
**dadurch gekennzeichnet,**
**dass** die Außenelektrode (1), die Innenelektrode (2) und das Diaphragma (3) oben von einem Deckel (12) gehalten sind, wobei der Deckel (12) mit Nuten versehen ist.

4. Einrichtung nach Anspruch 1,
**dadurch gekennzeichnet,**
**dass** die Innenelektrode (2) als Stab ausgebildet ist.

5. Einrichtung nach Anspruch 1,
**dadurch gekennzeichnet,**
**dass** die Innenelektrode (2) als Hohlzylinder ausgebildet ist, der mittels eines Verschluss-Stückes (18) verschlossen ist, dass in der Innenelektrode (2) mindestens eine Zwischenlage eingebaut ist, dass das Verschluss-Stück (18) und die Zwischenlage einen Innenraum abdichtet, der unterhalb der Öffnung (8) zum Flüssigkeitsableitungskanal liegt und dass die Öffnung (8) die innere Elektrodenkammer (4) mit dem Flüssigkeitsableitungskanal verbindet.

6. Einrichtung nach Anspruch 1,
**dadurch gekennzeichnet,**
**dass** die Innenelektrode (2) als zusammengesetzte Elektrode ausgebildet ist und mindestens zwei Teile aufweist, wobei der obere Teil mindestens mit einer Öffnung (8) versehen ist, die die innere Elektrodenkammer (4) mit dem Flüssigkeitsableitungskanal verbindet.

7. Einrichtung nach Anspruch 1,
**dadurch gekennzeichnet,**
**dass** die Teile der Innenelektrode (2) mechanisch miteinander verbunden sind.

8. Einrichtung nach Anspruch 7,
**dadurch gekennzeichnet,**
**dass** die Teile der Innenelektrode (2) miteinander verschraubt sind.

9. Einrichtung nach Anspruch 1,
**dadurch gekennzeichnet,**
**dass** im unteren Teil der Seitenwand der Außenelektrode (1) mindestens eine zusätzliche Öffnung vorgesehen ist, die die äußere Elektrodenkammer (5) mit dem Flüssigkeitszuführkanal (10, 11) verbindet.

10. Einrichtung nach Anspruch 1,
**dadurch gekennzeichnet,**
**dass** die Außenelektrode (1) als Anode und die Innenelektrode (2) als Kathode dienen.

11. Einrichtung nach Anspruch 1,
**dadurch gekennzeichnet,**
**dass** die Innenelektrode (2) mittels eines Stiftes (14) oder einer Schraube am unteren Flansch (13) befestigt ist.

12. Einrichtung nach Anspruch 1,
**dadurch gekennzeichnet,**
**dass** im unteren Flansch (13) ein ringförmiges Loch ausgebildet ist, das einen Kanal (10) zum Flüssigkeitszuführkanal (11) und zur inneren Elektrodenkammer (4) bildet.

13. Einrichtung nach Anspruch 12,
**dadurch gekennzeichnet,**
**dass** im unteren Flansch (13) mindestens ein horizontaler Kanal (11) für die
Flüssigkeitszufuhr gebildet ist, der über das ringförmige Loch (10) mit dem Kanal (9) für die Flüssigkeitszufuhr in die innere Elektrodenkammer (4) verbunden ist.

14. Einrichtung nach Anspruch 1,
**dadurch gekennzeichnet,**
**dass** das halbdurchlässige Diaphragma (3) aus Zirkoniumoxidkeramik bzw. aus Textil besteht.

15. Einrichtung nach Anspruch 1,
**dadurch gekennzeichnet,**
**dass** das halbdurchlässige Diaphragma (3) als Ultrafiltrations- oder Mikrofiltrations- oder Nanofiltrationsdiaphragma ausgebildet ist.

## Claims

1. A device for electrochemical treatment of water or aqueous solutions, having an outer electrode (1) in the form of a hollow cylinder and an inner electrode (20), coaxially built into this outer electrode (1), in which a semipermeable membrane (3) is disposed between the outer electrode (1) and the inner electrode (2) and divides the electrode chamber into an inner and an outer electrode compartment (4 and 5), and an opening (6) which connects the outer electrode compartment (5) with an outlet conduit (7) for draining liquid is embodied in an upper part of the side wall of the outer electrode (1), and at least one opening (8) which connects the inner electrode compartment (4) with a liquid drainage conduit is provided in the upper part of the inner electrode (2),
**characterized in that**
the inner electrode compartment (4) communicates directly with a liquid supply conduit (10, 11); and
the inner electrode (2) in the lower part is embodied as a solid wall.

2. The device in accordance with claim 1,
**characterized in that**
the outer electrode (1), the inner electrode (2), and the membrane (3) are secured to a lower flange (13), which is provided with the liquid supply conduit (10, 11); and
the liquid supply conduit (10, 11) is in communication with the inner electrode compartment (4).

3. The device in accordance with claim 1,
**characterized in that**
the outer electrode (1), the inner electrode (2), and the membrane (3) are retained at the top by a cap (12), and the cap (12) is provided with grooves.

4. The device in accordance with claim 1,
**characterized in that**
the inner electrode (2) is embodied as a rod.

5. The device in accordance with claim 1,
**characterized in that**
the inner electrode (2) is embodied as a hollow cylinder, which is closed by means of a closure piece (18); that at least one intermediate layer is built into the inner electrode (2); that the closure piece (18) and the intermediate layer seal off an inner chamber which is located below the opening (8) to the liquid drainage conduit; and that the opening (8) connects the inner electrode compartment (4) to the liquid drainage conduit.

6. The device in accordance with claim 1,
**characterized in that**
the inner electrode (2) is embodied as a composite electrode and has at least two parts, the upper part being provided at least with an opening (8) which connects the inner electrode compartment (4) to the liquid drainage conduit.

7. The device in accordance with claim 1,
**characterized in that**
the parts of the inner electrode (2) are connected mechanically to one another.

8. The device in accordance with claim 7,
**characterized in that**
the parts of the inner electrode (2) are screwed together.

9. The device in accordance with claim 1,
**characterized in that**
at least one additional opening, which connects the outer electrode compartment (5) to the liquid supply conduit (10, 11), is provided in the lower part of the side wall of the outer electrode (1).

10. The device in accordance with claim 1,
**characterized in that**
the outer electrode (2) acts as an anode, and the inner electrode (2) acts as a cathode.

11. The device in accordance with claim 1,
**characterized in that**
the inner electrode (2) is secured to the lower flange (13) by means of a pin (13) or a screw.

12. The device in accordance with claim 1,
**characterized in that**
an annular hole, which forms a conduit (10) to the liquid supply conduit (11) and to the inner electrode compartment (4), is embodied in the lower flange (13).

13. The device in accordance with claim 12,
**characterized in that**
at least one horizontal conduit (11) for the supply of liquid is formed in the lower flange (13) and communicates via the annular hole (10) with the conduit (9) for supplying liquid into the inner electrode compartment (4).

14. The device in accordance with claim 1,
**characterized in that**
the semipermeable membrane (3) comprises zirconium oxide ceramic or textile.

15. The device in accordance with claim 1,
**characterized in that**
the semipermeable membrane (3) is embodied as an ultrafiltration or microfiltration or nanofiltration membrane.

## Revendications

1. Dispositif de traitement électrochimique de l'eau ou de solutions aqueuses, comprenant une électrode extérieure (1) en forme de cylindre creux et une électrode intérieure (2) incorporée coaxialement dans cette électrode extérieure (1), une membrane semi-perméable (3) étant disposée entre l'électrode extérieure (1) et l'électrode intérieure (2), laquelle sépare la chambre des électrodes en une chambre d'électrode intérieure (4) et une chambre d'électrode extérieure (5), une ouverture (6) qui met en communication la chambre d'électrode extérieure (5) avec un canal de sortie (7) pour l'évacuation du liquide étant formée dans la partie supérieure de la paroi latérale de l'électrode extérieure (1), et au moins une ouverture (8) qui met en communication la chambre d'électrode intérieure (4) avec un canal d'évacuation de liquide étant prévue dans la partie supérieure de l'électrode intérieure (2), **caractérisé en ce**
**que** la chambre d'électrode intérieure (4) est directement en communication avec un canal d'amenée de liquide (10, 11) et
**que** l'électrode intérieure (2) est réalisée sous la forme d'une paroi pleine dans la partie inférieure.

2. Dispositif selon la revendication 1,
**caractérisé en ce**
**que** l'électrode extérieure (1), l'électrode intérieure (2) et la membrane (3) sont fixées à une bride inférieure (13) qui est pourvue du canal d'amenée de liquide (10,11) et
**que** le canal d'amenée de liquide (10, 11) est en communication avec la chambre d'électrode intérieure (4).

3. Dispositif selon la revendication 1,
**caractérisé en ce**
**que** l'électrode extérieure (1), l'électrode intérieure (2) et la membrane (3) sont tenues en partie haute par un couvercle (12), le couvercle (12) étant pourvu de rainures.

4. Dispositif selon la revendication 1,
**caractérisé en ce**
**que** l'électrode intérieure (2) est réalisée en forme de barreau.

5. Dispositif selon la revendication 1,
**caractérisé en ce**
**que** l'électrode intérieure (2) est réalisée en forme de cylindre creux qui est fermé au moyen d'une pièce de fermeture (18), qu'au moins une couche intermédiaire est incorporée dans l'électrode intérieure (2), que la pièce de fermeture (18) et la couche intermédiaire rendent étanche un espace intérieur qui se situe sous l'ouverture (8) allant vers le canal d'évacuation de liquide et que l'ouverture (8) met en communication la chambre d'électrode intérieure (4) avec le canal d'évacuation de liquide.

6. Dispositif selon la revendication 1,
**caractérisé en ce**
**que** l'électrode intérieure (2) est réalisée sous la forme d'une électrode composée et présente au moins deux parties, la partie supérieure étant pourvue au moins d'une ouverture (8) qui met en communication la chambre d'électrode intérieure (4) avec le canal d'évacuation de liquide.

7. Dispositif selon la revendication 1,
**caractérisé en ce**
**que** les parties de l'électrode intérieure (2) sont reliées entre elles mécaniquement.

8. Dispositif selon la revendication 7,
**caractérisé en ce**
**que** les parties de l'électrode intérieure (2) sont vissées ensemble.

9. Dispositif selon la revendication 1,
**caractérisé en ce**
**qu'**il est prévu dans la partie inférieure de la paroi latérale de l'électrode extérieure (1) au moins une ouverture supplémentaire qui met en communication la chambre d'électrode extérieure (5) avec le canal d'amenée de liquide (10, 11).

10. Dispositif selon la revendication 1,
**caractérisé en ce**
**que** l'électrode extérieure (1) sert d'anode et l'électrode intérieure (2) de cathode.

11. Dispositif selon la revendication 1,
**caractérisé en ce**
**que** l'électrode intérieure (2) est fixée à la bride inférieure (13) au moyen d'un goujon (14) ou d'une vis.

12. Dispositif selon la revendication 1,
**caractérisé en ce**
**qu'**un trou annulaire qui forme un canal (10) allant vers le canal d'amenée de liquide (11) et vers la chambre d'électrode intérieure (4) est réalisé dans la bride inférieure (13).

13. Dispositif selon la revendication 12,
**caractérisé en ce**
**que** dans la bride inférieure (13) est formé au moins un canal horizontal (11) pour l'amenée de liquide, lequel est en communication via le trou annulaire (10) avec le canal (9) pour l'amenée de liquide dans la chambre d'électrode intérieure (4).

14. Dispositif selon la revendication 1,
**caractérisé en ce**
**que** la membrane semi-perméable (3) est en céramique d'oxyde de zirconium ou en textile.

15. Dispositif selon la revendication 1,
**caractérisé en ce**
**que** la membrane semi-perméable (3) est réalisée sous la forme d'une membrane d'ultrafiltration, de microfiltration ou de nanofiltration.
